**Europäisches Patentamt**

**European Patent Office** 

**Office européen des brevets**

(19)

(11) Veröffentlichungsnummer : **0 096 825**
**B1**

(12)

# EUROPÄISCHE PATENTSCHRIFT

(45) Veröffentlichungstag der Patentschrift :
**30.10.85**

(21) Anmeldenummer : **83105572.8**

(22) Anmeldetag : **07.06.83**

(51) Int. Cl.⁴ : **C 02 F   3/28**

(54) **Vorrichtung zur anaeroben Abwasserreinigung.**

(30) Priorität : **12.06.82 DE 3222218**

(43) Veröffentlichungstag der Anmeldung :
**28.12.83 Patentblatt 83/52**

(45) Bekanntmachung des Hinweises auf die Patenterteilung : **30.10.85 Patentblatt 85/44**

(84) Benannte Vertragsstaaten :
**AT DE FR GB IT**

(56) Entgegenhaltungen :
**FR-A- 1 356 452**
**GB-A- 2 021 549**

(73) Patentinhaber : **Lehrter Zucker AG**
**Burgdorfer Srasse 4**
**D-3160 Lehrte (DE)**

(72) Erfinder : **Kleber, Hermann, Dipl.-Zfb.Ing.**
**Manskestrasse 20**
**D-3160 Lehrte (DE)**
Erfinder : **Below, Jürgen, Dipl.-Ing.**
**Schützenstrasse 26**
**D-3160 Lehrte (DE)**
Erfinder : **Heyer, Heinz, Dipl.-Ing.**
**Sonnenweg 3**
**D-3012 Langenhagen (DE)**

(74) Vertreter : **Döring, Rudolf, Dr.-Ing.**
**Patentanwälte Dr.-Ing. R. Döring Dipl.-Phys. Dr. J.**
**Fricke Jasperallee 1a**
**D-3300 Braunschweig (DE)**

## Beschreibung

Die Erfindung betrifft eine Vorrichtung zur anaeroben Abwasserreinigung mit einem vorzugsweise kubischen Reaktionsbehälter, welcher einen Faulraum, einen Gassammelraum und einen Überlaufraum aufweist, wobei über den gesamten lichten Querschnitt eine Vielzahl von horizontal nebeneinander angeordneten, jeweils wechselweise gegenüber der Vertikalen geneigten Trennwänden von oben in den Reaktionsbehälter hineinragen, die sich mit ihren nach unten weisenden freien Enden unter Belassung eines Spaltes einander überlappen und im oberen Bereich rinnenförmige Gassammelräume begrenzen sowie in ihrem mittleren Bereich jeweils mit Gasablenkeinrichtungen versehene Durchtrittsöffnungen aufweisen.

Es sind Vorrichtungen in verschiedenen Ausführungsformen bekannt (CH-A-340 198, DE-A-27 28 585), bei denen in den Faulraum hineinragende Trennwände als trichterförmige oder geneigt verlaufende Trennwände angeordnet sind, welche die bodenseitige Begrenzung einer Nachklärkammer bilden und mit einer Schlammaustrittsöffnung ausgerüstet sind. Die Nachklärkammer ist dabei über Durchtrittsöffnungen und zugehörige Gasablenkeinrichtungen oder aber durch eine rohrförmige Verdindungsleitung mit dem Raum unterhalb der Trennwand verbunden, so daß in die Nachklärkammer ein Schlamm-Wasser-Gemisch überführt wird und eine Umlaufströmung durch die beiden mittels der Trennwände voneinander getrennten Räume erfolgt, die sich durch die unterschiedliche Dichte der im Abwasser enthaltenen Substanzen einstellt.

Es sind weiterhin Kläranlagen bekannt (DE-A-29 20 978, stimmt überein mit GB-A-2 021 549), die bei gleicher Arbeitsweise wie die vorstehend beschriebenen Anordnungen mit einer Mehrzahl von Nachklärkammern im oberen Bereich des Reaktionsbehälters ausgerüstet sind. Zu diesem Zweck ragen eine Reihe von horizontal nebeneinander angeordneten, jeweils wechselweise gegenüber der Vertikalen geneigten Trennwänden von oben in den Reaktionsbehälter, wobei sich die nach unten weisenden Enden der Trennwände unter Belassung eines freien Spaltes einander überlappen. Die Trennwände weisen längs ihres mittleren Bereiches eine horizontale Unterbrechung in Form eines Durchtrittsspaltes auf, welcher durch eine schuppenartig versetzte überlappte Anordnung von zwei jeweils zu einer Trennwand gehörigen Wandteilen gebildet wird, um die Überführung des Schlamm-Wasser-Gemisches in die Nachklärkammern unter Ableitung der Gasblasen zu bewirken.

In den Nachklärkammern vollzieht sich die restliche anaerobe Reinigung des Abwassers, ehe der Schlamm sich absetzt und entweder aufgrund der Schwerkraft oder aber unter Zuhilfenahme von Abstreifern durch die Schlammauslaßöffnung wiederum in den Raum unterhalb der Trennwände überführt wird. Dabei bildet nur der obere Bereich der Nachklärkammern den Überlaufraum, aus dem das gereinigte Abwasser in Überlaufrinnen überführt wird.

Die Trennwände begrenzen dabei gleichzeitig nach oben hin rinnenförmige Gassammelräume, in welchen das sich in dem Raum unterhalb der Trennwände bildende Faulgas sammelt und aus denen es abgezogen werden kann.

Durch die in der Nachklärkammer erfolgende restliche Reinigung des Abwassers durch biologische Reaktion werden auch in der Nachklärkammer Faulgase erzeugt, die entweder ungenutzt entweichen und somit verlorengehen oder aber nur durch sehr bauaufwendige Maßnahmen gesammelt werden müssen.

Die bekannten Vorrichtungen erfordern, insbesondere auch für die Anordnung der Trennwände und die Schaffung der Gassammelräume sowie der Gasablenkeinrichtungen, einen sehr erheblichen baulichen Aufwand, wenn man berücksichtigt, welche Größenabmessungen derartige Vorrichtungen in der Praxis haben müssen.

Ferner ergeben sich bei den als Baueinheiten ausgebildeten Nachklärkammern mit nach unten hin konvergierend verlaufenden Trennwänden Abdichtungsprobleme zwischen den Nachklärkammern und dem übrigen Raum des Reaktionsbehälters sowie auch hinsichtlich der Gassammelräume.

Vorliegender Erfindung liegt die Aufgabe zugrunde, eine Vorrichtung der einleitend genannten Art so auszubilden, daß die Reinigung des Abwassers und damit die Bildung des Faulgases praktisch ausschließlich in dem Raum unterhalb der Trennwände erfolgt und bei Verwendung von nur wenigen und weitgehend einheitlichen Bauteilen für die Trennwände eine Überführung des Wassers ohne Schlamm- und Gasanteile in ruhiger Strömung durch die Durchtrittsöffnungen in den Trennwänden zu dem Überlaufraum erfolgt.

Die vorstehende Aufgabe wird erfindungsgemäß durch die im Kennzeichen des Hauptanspruches genannten Merkmale gelöst.

Durch die Ausbildung, Anordnung und Höhe der satteldachförmigen Bauteile im Verhältnis zur Gesamthöhe des Reaktionsbehälters ergibt sich eine obere Begrenzung bzw. Trennung zwischen dem Faulraum und dem Überlaufraum nach Art eines Sägedaches, wobei die Firstbereiche der satteldachförmigen Bauteile die Gassammelkammern bilden. Die Anordnung und Ausbildung der in den Trennwänden vorgesehenen Rohre stellt dabei sicher, daß die im Faulraum aufsteigenden Gasbläschen nicht in den Überlaufraum gelangen, sondern ausschließlich in die genannten Gassammelräume.

Dadurch, daß der Faulraum wenigstens die dreifache Höhe des Überlaufraumes aufweist und in der Regel der Reaktionsbehälter etwa zur Hälfte mit Schlamm gefüllt wird, ergibt sich oberhalb des Schlammes eine zusätzliche Reaktionszone, wobei im Bereich unmittelbar oberhalb der Schlammfüllung durch die von den aufsteigenden Gasbläschen mitgerissenen Schlammteile ein Schlamm-Wasser-Gemisch entsteht, in welchem durch die mitgeführte aktive Biomasse eine Art « Restreaktion » oder « Nachreaktion » erfolgt, welche jedoch im Zuge der Aufwärtsströmung vor Erreichen der satteldachförmigen Bauteile praktisch abgeschlossen ist, so daß dort bereits die Sedimentation der Schlammpartikel erfolgt, während gleichzeitig mit der aufsteigenden Strömung eine Agglomeration der Gasblasen einhergeht. In Höhe der Rohre, welche in den Trennwänden angeordnet sind und die in den Überlaufraum ragen, ist praktisch nur noch ein Gemisch von Wasser und Gasbläschen vorhanden, so daß in die Rohre infolge ihrer in den Faulraum ragenden abgeschrägten Enden praktisch nur noch Wasser eintreten kann, während die Gasbläschen um den Eintrittsquerschnitt dieser Rohre herumgeleitet werden und in die Gassammelräume aufsteigen. Das in den Überlaufraum eintretende Wasser erfährt eine Strömungsberuhigung und strömt teilweise durch die zwischen den benachbarten satteldachförmigen Bauteilen befindlichen Spalte zurück in den Faulraum und nimmt erneut an der Zirkulationsströmung teil, während ein anderer Teil des in den Überlaufraum gelangenden Wassers nach oben strömt und durch den Überlauf abgeführt wird.

Zweckmäßig ist es, wenn die Trennwände gegenüber der Vertikalen um einen Winkel α von maximal 30° geneigt sind. Hierdurch ergibt sich eine besonders große Fläche für den Gasaustritt in die Gassammelkammern und damit auch eine verhältnismäßig geringe Turbulenz des Gas-Wasser-Gemisches im Bereich der von den satteldachförmigen Bauteilen begrenzten Auftriebszonen. Dies wiederum hat zur Folge, daß die Gasbläschen in dieser Zone praktisch nur eine Aufwärtsbewegung durchführen und somit durch die in den Trennwänden gehaltenen Rohre abgelenkt werden und nicht mit der in den Überlaufraum strömenden Flüssigkeit mitgeführt werden können.

Von besonderem Vorteil ist es, wenn die Trennwände gleiche Neigungswinkel α aufweisen. Hierdurch ergibt sich ein symmetrischer Aufbau und eine Vergleichmäßigung der Strömungsverhältnisse beim Übertritt des gereinigten Wassers von dem Faulraum in den Überlaufraum.

Zur Erhöhung der Stabilität der satteldachförmigen Bauteile empfiehlt es sich, zwischen den Trennwänden eines jeden satteldachförmigen Bauteiles den Firstraum dieser Bauteile freilassende trapezförmige Querschotten vorzusehen. Diese Querschotten bewirken nicht nur eine Aussteifung der satteldachförmigen Bauteile, so daß diese in größerer Länge hergestellt werden können, sondern sie bewirken auch eine Strömungsberuhigung und eine Unterbindung der Querströmung des Gas-Flüssigkeits-Gemisches in dem oberen, von den genannten Bauteilen begrenzten Bereich der Auftriebsströmung.

Die satteldachförmigen Bauteile werden zweckmäßig als Fertigelemente aus Beton ausgebildet, insbesondere wenn auch der Reaktionsbehälter aus Beton oder Mauerwerk besteht. Dabei können die satteldachförmigen Bauteile zugleich zur Aussteifung bzw. als Zuganker dienen, wenn sie mit ihren stirnseitigen Enden in die Wandungen des Reaktionsbehälters eingebunden sind. Hierdurch wird es möglich, den Reaktionsbehälter mit einer nichttragenden, durchgehenden oberen Abdeckung zu verschließen.

Zur Vermeidung von Trubulenzen bei der Zuführung des Wassers in den Überlaufraum sowie zur sicheren Entnahme des Wassers aus dem Faulraum im Bereich einer beruhigten Aufwärtsströmung ist es vorteilhaft, wenn die Rohre in den Trennwänden etwa in halber Höhe der satteldachförmigen Bauteile in gleicher horizontaler Ebene gegeneinander versetzt angeordnet sind und sich etwa von der lotrechten Mittellängsebene der satteldachförmigen Bauteile bis etwa zur lotrechten Trennebene benachbarter satteldachförmiger Bauteile erstrecken.

Die Erfindung wird anhand eines in der Zeichnung schematisch dargestellten Ausführungsbeispieles näher erläutert, wobei zur optimalen Anpassung an Durchsatzmenge und Schadstofffracht verschieden belasteter Abwässer eine dreiteilige Ausführung dargestellt ist.

Es zeigen :

Figur 1 eine Draufsicht auf eine Vorrichtung zur anaeroben Abwasserreinigung mit drei Reaktionsbehältern,

Figur 2 einen Längsschnitt durch einen der Reaktionsbehälter gemäß Fig. 1 längs der Schnitlinie A-A,

Figur 3 einen Querschnitt durch die Vorrichtung gemäß Fig. 1 längs der Schnittlinie B-B und

Figur 4 einen teilweisen Längsschnitt durch die Vorrichtung in einer gegenüber Fig. 2 vergrößerten Darstellung.

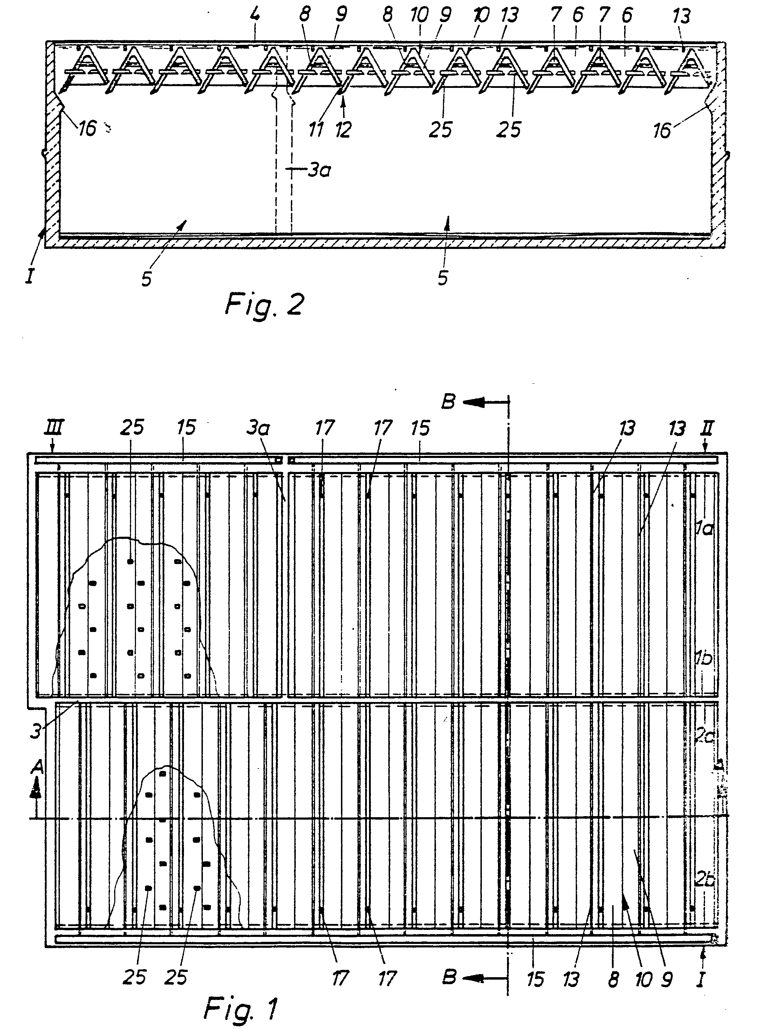

Fig. 1 zeigt die nebeneinanderliegenden Reaktionsbehälter I, II, III mit gemeinsamen Zwischenwänden 3 und 3a ohne die obere Abdeckung. In Fig. 2 ist der Reaktionsbehälter I mit einer oberen Abdeckung 4 wiedergegeben. Die Reaktionsbehälter II und III sind in dem Ausführungsbeispiel durch die Zwischenwand 3a getrennt.

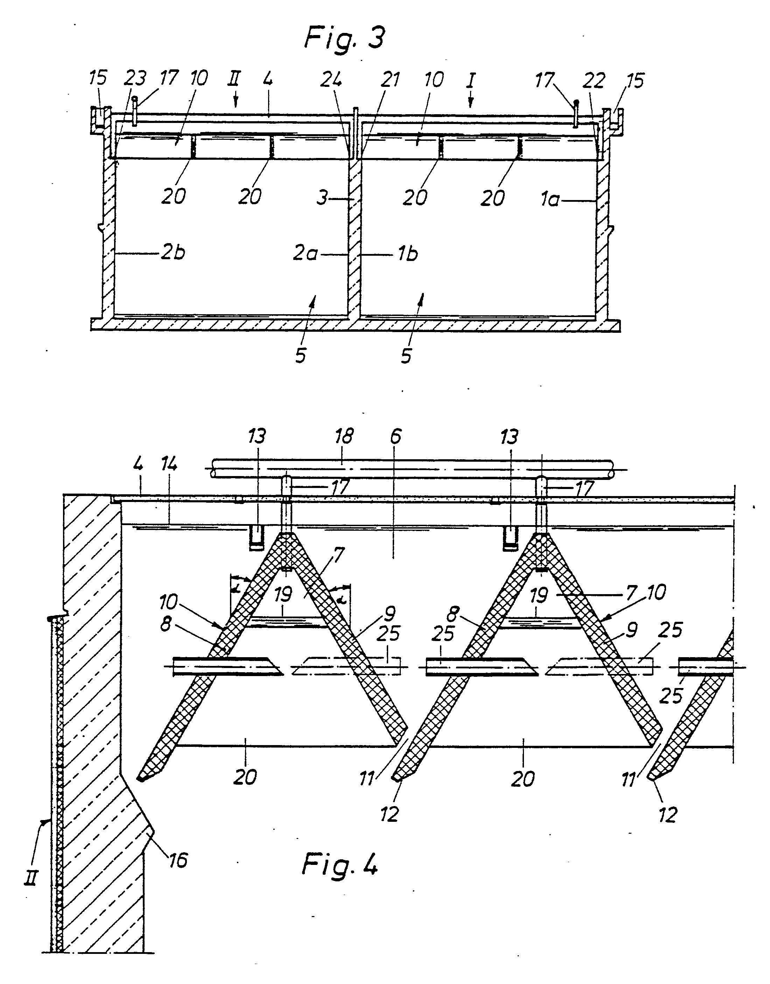

Die Reaktionsbehälter I, II und III umschließen jeweils einen Faulraum 5, einen Überlaufraum 6 und Gassammelräume 7. Zwischen zwei gegenüberliegenden Seiten 1a und 1b bzw. 2a und 2b der Reaktionsbehälter I bzw. II und III erstrecken sich Trennwände 8 und 9, welche den Faulraum 5 nach oben und den Überlaufraum 6 nach unten hin abgrenzen und die paarweise zu satteldachförmigen Bauteilen 10 verbunden sind. Die jeweils ein satteldachförmiges Bauteil 10 bildenden Trennwände 8 bzw. 9 sind um den Winkel α gegenüber der Lotrechten wechselweise geneigt, wie besonders deutlich aus Fig. 4 hervorgeht. Die nach unten gerichteten freien Enden der Trennwände 8 und 9 überlappen einander derart, daß ein Spalt 11 zwischen diesen Enden verbleibt. Da sich die freien Enden der Trennwände 8 weiter nach unten erstrecken als die Trennwände 9, erfolgt eine Abdeckung der Spalte 11 in der Weise, daß im Faulraum entstehende Gasblasen nicht in den Spalt 11 gelangen, sondern bei ihrer aufsteigenden Bewegung an diesen Spalten 11 vorbeigeführt werden.

Die satteldachförmigen Bauteile 10 entsprechen in ihrer Höhe etwa der Höhe des Überlaufraumes 6, in dessen oberem Bereich Überlaufrinnen 13 vorgesehen sind, die den Wasserstand 14 des gereinigten Wassers bestimmen. An den Längsseiten der Reaktionsbehälter I, II bzw. III münden die Überlaufrinnen 13 in Sammelrinnen 15 aus, wie besonders deutlich aus den Fig. 1 und 3 hervorgeht. Der obere Abschluß der Reaktionsbehälter wird jeweils durch eine horizontale plattenförmige Abdeckung 4 gebildet. Während zwischen benachbarten satteldachförmigen Bauteilen 10 durch die überlappenden freien Enden 12 der Trennwände 8 ein Übertritt der im Faulraum aufsteigenden Gasblasen in den Überlaufraum verhindert wird, ist bei den an die Seitenwände der Reaktionsbehälter angrenzenden satteldachförmigen Bauteilen 10 unterhalb der freien Enden 12 der Trennwände 8 ein nach innen gerichteter Vorsprung 16 der jeweiligen Seitenwand vorgesehen, welcher aufsteigende Gasblasen auch in diesem Bereich ableitet, so daß sie in die von den Firstbereichen der satteldachförmigen Bauteile gebildeten rinnenförmigen Gassamelräume 7 aufsteigen. Die Gassammelräume sind mit Gasaustrittsleitungen 17 verbunden, welche in eine in Fig. 4 dargestellte Sammelleitung 18 münden. Nach unten hin werden die Gassammelräume 7 durch den Wasserstand 19 innerhalb der satteldachförmigen Bauteile begrenzt.

Aus den Fig. 2 und 3 ist ersichtlich, daß die Höhe des Faulraumes 5 mindestens die dreifache Höhe des Überlaufraumes 6 aufweist, wobei letzterer etwa der Höhe der satteldachförmigen Bauteile 10 entspricht. Dieses Höhenverhältnis ist von besonderer Bedeutung und in Verbindung mit einer Schlammfüllung des Reaktionsbehälters bis etwa zur Hälfte seiner Gesamthöhe deshalb von besonderer Wichtigkeit, weil erfindungsgemäß zwischen der Schlammfüllung und dem Überlaufraum eine Reaktions- und Sedimentationszone verbleiben soll, die etwa die halbe Höhe wie die Schlammfüllmung aufweist. In dieser Zone erfolgt insbesondere im unteren Bereich eine Reaktion der von der aufströmenden Flüssigkeit und den Gasblasen mitgeführten Schlammteilchen, die jedoch nach der erfolgten Reaktion wieder sedimentieren, während gleichzeitig in dieser Zone eine Agglomeration der Gasblasen erfolgt.

Zur gegenseitigen Abstützung der Trennwände 8 und 9 sind die satteldachförmigen Bauteile 10 mit trapezförmigen Querschotten 20 ausgerüstet, welche jedoch den Firstraum der satteldachförmigen Bauteile freilassen, so daß dort die in Längsrichtung der satteldachförmigen Bauteile durchgehenden Gassammelräume 7 erhalten bleiben. An ihren stirnseitigen Enden sind die satteldachförmigen Bauteile 10 auf abgesetzten Rändern 21 und 22 bzw. 23 und 24 der Reaktionsbehälter I bzw. II und III abgestützt und gleichzeitig auch in die Wandungen 1a und 1b bzw. 2a und 2b eingebunden, so daß sie Aussteifungen bzw. Zuganker für die Reaktionsbehälter bilden. Die satteldachförmigen Bauteile 10 bestehen in dem wiedergegebenen Ausführungsbeispiel aus vorgefertigten Betonteilen, ebenso wie die Reaktionsbehälter I, II und III in dem Beispiel aus Beton hergestellt sind.

In den Trennwänden 8 und 9 der satteldachförmigen Bauteile 10 sind horizontal verlaufende Rohre 25 vorgesehen, welche an ihren in den Faulraum 5 ragenden Enden nach oben in Richtung zur zugehörigen Trennwand abgeschrägt sind. Die Rohre 25 sind dabei etwa in halber Höhe der satteldachförmigen Bauteile 10 in den Trennwänden 8 und 9 in gleicher horizontaler Ebene, jedoch gegeneinander versetzt angeordnet und erstrecken sich etwa von der lotrechten Mittellängsebene der satteldachförmigen Bauteile 10 bis etwa zur lotrechten Trennebene zwischen den benachbarten satteldachförmigen Bauteilen.

Nach der Sedimentation des Schlammes in der oberhalb der Schlammfüllung gebildeten Reaktionszone gelangt das weiter nach oben strömende Wasser-Gas-Gemisch im Zuge seiner Strömungsbewegung in den Bereich der Rohre 25. Dort werden die Gasbläschen durch die abgeschrägten Enden der Rohre 25 abgelenkt, so daß lediglich das geroinigte Wasser durch die Rohre 25 von dem Faulraum 5 in den Überlaufraum 6 gelangt. Die Einströmöffnung der Rohre 25 befindet sich bei der beschriebenen Anordnung in jenem Bereich, in welchem eine beruhigte Aufwärtsströmung des Gas-Wasser-Gemisches stattfindet ohne eine besondere Anreicherung an Gasbläschen, die im Bereich der Berührungsfläche des Gas-Wasser-Gemisches mit den Trennwänden 8 und 9 vermehrt auftritt. Der Austritt des Wassers aus den Rohren 25 erfolgt wiederum im Bereich einer beruhigten Strömung des Überlaufraumes 6, wobei ein Teil des ausströmenden Wassers infolge der Zirkulationswirkung durch die Spalte 11 wieder in den Faulraum 5 gelangt, während ein anderer Teil mit der Aufwärtsströmung zu den Überlaufrinnen 13 geführt wird und von dort aus in die Sammelrinnen 15 gelangt. Da durch die Vielzahl der Rohre 25 nur eine geringe Strömungsgeschwindigkeit bei der Überführung des Wassers aus dem Faulraum in den Überlaufraum erfolgt, besteht keine Gefahr, daß im Zuge dieser Strömung Gasbläschen mitgerissen werden. Mit zunehmendem Volumen des in den Gassammelräumen 7 anfallenden Gases wird der Wasserstand 19 innerhalb der satteldachförmigen Bauteile 10 bei gleichzeitiger Druckerhöhung des Gases gesenkt. Eine günstige Einstellung des Wasserstandes 19 wird durch Abführen des Gases aus den Gassammelräumen 7 über eine entsprechende Wasservorlage erreicht.

Die Reaktionsbehälter I bzw. II und III werden

zweckmäßig wenigstens teilweise im Erdreich eingelassen, so daß sich der Faulraum 5 ebenfalls zumindest teilweise in einem frostsicheren Bereich befindet. Die Zuführung des zu reinigenden Abwassers erfolgt zweckmäßigerweise von oben, da auf diese Weise das Leerlaufen der Zuleitungen bei Betriebsende einfach möglich ist.

**Patentansprüche**

1. Vorrichtung zur anaeroben Abwasserreinigung mit einem vorzugsweise kubischen Reaktionsbehälter, welcher einen Faulraum, einen Gassammelraum und einen Überlaufraum aufweist, wobei über den gesamten lichten Querschnitt eine Vielzahl von horizontal nebeneinander angeordneten, jeweils wechselweise gegenüber der Vertikalen geneigten Trennwänden von oben in den Reaktionsbehälter hineinragen, die sich mit ihren nach unten weisenden freien Enden unter Belassung eines Spaltes einander überlappen und im oberen Bereich rinnenförmige Gassammelräume begrenzen sowie in ihrem mittleren Bereich jeweils mit Gasablenkeinrichtungen versehene Durchtrittsöffnungen aufweisen, dadurch gekennzeichnet, daß die Trennwände (8, 9) sich nur über die Höhe des Überlaufraumes (6) erstrecken und der Faulraum (5) wenigstens die dreifache Höhe des Überlaufraumes aufweist, daß die Trennwände jeweils paarweise zu satteldachförmigen Bauteilen (10) verbunden sind und mit ihrem Firstbereich die Gassammelrinnen (7) begrenzen, und daß sich durch die Trennwände in den Faulraum und in den Überlaufraum ragende, etwa horizontal verlaufende Rohre (25) erstrecken, welche an ihren in den Faulraum ragenden Enden nach oben in Richtung der sie aufnehmenden Trennwände abgeschrägt sind.

2. Vorrichtung nach Anspruch 1, dadurch gekenzeichnet, daß die Trennwände (8, 9) gegenüber der Vertikalen um einen Winkel α von maximal 30° geneigt sind.

3. Vorrichtung nach Anspruch 2, dadurch gekennzeichnet, daß die Trennwände (8, 9) gleiche Neigungswinkel α aufweisen.

4. Vorrichtung nach einem der vorhergehenden Ansprüche, dadurch gekennzeichnet, daß zwischen den Trennwänden (8, 9) eines jeden satteldachförmigen Bauteiles (10) den Firstraum dieser Bauteile freilasssende trapezförmige Querschotten (20) vorgesehen sind.

5. Vorrichtung nach einem der vorhergehenden Ansprüche, dadurch gekennzeichnet, daß die satteldachförmigen Bauteile (10) als Fertigelemente aus Beton ausgebildet sind.

6. Vorrichtung nach einem der vorhergehenden Ansprüche, dadurch gekennzeichnet, daß die satteldachförmigen Bauteile (10) mit ihren stirnseitigen Enden in die Wandungen (1a, 2b) des Reaktionsbehälters (1 bzw. 2) eingebunden sind.

7. Vorrichtung nach einem der vorhergehenden Ansprüche, dadurch gekennzeichnet, daß die Rohre (25) in den Trennwänden (8, 9) etwa in halber Höhe der satteldachförmigen Bauteile (10) in gleicher horizontaler Ebene gegeneinander versetzt angeordnet sind und sich etwa von der lotrechten Mittellängsebene der satteldachförmigen Bauteile bis etwa zur lotrechten Trennebene benachbarter satteldachförmiger Bauteile erstrecken.

**Claims**

1. An apparatus for anaerobic sewage purification having a preferably cubic reaction tank, which comprises a sludge-digestion chamber, a gas-collecting chamber and an overflow chamber ; wherein a plurality of partitions, which are disposed horizontally side by side and which are each inclined alternately in relation to the vertical, project from above into the reaction tank, over the whole internal cross-section, wherein the positions overlap one another with their free downwardly directed ends, leaving a gap, and defining channel-shaped gas collecting chambers in the upper region and have passages, each provided with gas-deflecting devices, in their middle region ; characterised in that the partitions (8, 9) extend only for the height of the overflow chamber (6), and the sludge-digestion chamber (5) has at least three times the height of the overflow chamber, that the partitions are connected to one another in pairs to form components (10) in the form of a ridged roof and define the gas-collecting channels (7) at their ridge region, and that pipes (25), which project into the sludge-digestion chamber and into the overflow chamber and which extend substantially horizontally, extend through the partitions and are bevelled upwards in a direction towards the partitions receiving them, at the ends which project into the sludge-digestion chamber.

2. An apparatus as claimed in Claim 1, characterised in that the partitions (8, 9) are inclined at an angle α of a maximum of 30° in relation to the vertical.

3. An apparatus as claimed in Claim 2, characterised in that the partitions (8, 9) have the same angle of inclination α.

4. An apparatus as claimed in one of the preceding claims, characterised in that trapezoidal transverse bulkheads (20) are provided between the partitions (8, 9) of each ridge-roof component (10), leaving the ridge area of these components free.

5. An apparatus as claimed in one of the preceding claims, characterised in that the ridge-roof components (10) are made of concrete in the form of complete elements.

6. An apparatus as claimed in one of the preceding claims, characterised in that the ridge-roof components (10) are incorporated into the walls (1a, 2b) of the reaction tank (1 or 2) at their ends.

7. An apparatus as claimed in one of the preceding claims, characterised in that the pipes (25) in the partitions (8, 9) are disposed substantially half way up the ridge-roof components (10), being staggered in relation to one another in the same horizontal plane and extend substantially form the vertical central longitudinal plane of the ridge-roof components substantially as far as the vertical plane separating adjacent ridge-roof components.

## Revendications

1. Dispositif pour l'épuration anaérobie d'eau usée comportant un réacteur, de préférence cubique, qui présente un digesteur, une chambre collectrice de gaz et une chambre de débordement, dans lequel, sur toute la section libre, de multiples cloisons disposées horizontalement côte à côte, inclinées chaque fois alternativement par rapport à la verticale, pénètrent dans le réacteur par le haut et se chevauchent par leurs extrémités libres tournées vers le bas en ménageant un interstice et limitent dans la région supérieure des chambres collectrices de gaz en forme de gouttière et présentent chacune en leur région centrale des ouvertures de passage munies de dispositifs déflecteurs de gaz, caractérisé en ce que les cloisons (8, 9) s'étendent seulement sur la hauteur de la chambre de débordement (6) et le digesteur présente au moins trois fois la hauteur de la chambre de débordement, en ce que les cloisons sont chaque fois reliées par paires en formant des éléments de construction en forme de comble en selle (10) et limitent par leur région de faîte les gouttières collectrices de gaz (7), et en ce qu'à travers les cloisons s'étendent des tubes (25) à peu près horizontaux, pénétrant dans le digesteur et dans la chambre de débordement et qui, à leurs extrémités pénétrant dans le digesteur, sont biseautés vers le haut en direction des cloisons qui les logent.

2. Dispositif selon la revendication 1, caractérisé en ce que les cloisons (8, 9) sont inclinées, relativement à la verticale, d'un angle α de 30° au maximum.

3. Dispositif selon la revendication 2, caractérisé en ce que les cloisons (8, 9) présentent des angles d'inclinaison α égaux.

4. Dispositif selon l'une des revendications précédentes, caractérisé en ce qu'entre les cloisons (8, 9) de chacun des éléments de construction en forme de comble en selle (10) sont prévues des cloisons transversales trapézoïdales (20) laissant libre la zone de faîte de ces éléments de construction.

5. Dispositif selon l'une des revendications précédentes, caractérisé en ce que les éléments de construction en forme de comble en selle (10) sont conçus sous la forme d'éléments préfabriqués en béton.

6. Dispositif selon l'une des revendications précédentes, caractérisé en ce que les éléments de construction en forme de comble de selle (10) sont liés, par leurs extrémités frontales, dans les parois (1a, 2b) du réacteur (1, 2).

7. Dispositif selon l'une des revendications précédentes, caractérisé en ce que les tubes (25) sont disposés avec décalage entre eux dans les cloisons (8, 9), à peu près à mi-hauteur des éléments de construction en forme de comble en selle (10), dans le même 'plan horizontal, et s'étendent, à peu près du plan médian longitudinal vertical des éléments de construction en forme de comble en selle, à peu près jusqu'au plan vertical de séparation d'éléments de construction voisins en forme de comble en selle.

Fig. 2

Fig. 1

## Fig. 3

## Fig. 4